# EUROPEAN PATENT SPECIFICATION

(11) **EP 4 307 522 B1**
(45) Date of publication and mention of the grant of the patent: **29.10.2025**
(21) Application number: 22787829.5
(22) Date of filing: 09.02.2022
(51) Int. Cl.: H02J 7/34, F24F 11/88

(54) **POWER SUPPLY CIRCUIT AND AIR-CONDITIONING DEVICE**
STROMVERSORGUNGSSCHALTUNG UND KLIMAANLAGE
CIRCUIT D'ALIMENTATION ÉLECTRIQUE ET DISPOSITIF DE CLIMATISATION

(30) Priority: 16.04.2021 JP 2021069618
(43) Date of publication of application: 17.01.2024
(73) Proprietor: MITSUBISHI HEAVY INDUSTRIES THERMAL SYSTEMS, LTD., Tokyo 100-8332 (JP)
(72) Inventor: ADACHI, Naoya, Tokyo 100-8332 (JP)
(74) Representative: Cabinet Beau de Loménie
(86) International application number: PCT/JP2022/005203
(87) International publication number: WO 2022/219901

(56) References cited:
- WO-A1-2020/183575
- JP-A- 2005 210 774
- JP-A- 2016 130 419
- JP-A- 2021 046 981
- JP-A- H11 332 123
- JP-A- S6 374 327
- JP-B2- 5 304 279

## Description

### Technical Field

The present disclosure relates to a power supply circuit and an air-conditioning device.

### Background Art

A super capacitor (electric double-layer capacitor) is used as a capacitive element. The super capacitor has a characteristic of having a large capacitance, and is used as a power storage element in a circuit (for example, PTL 1). PTL2 discloses an energy storage device using electric double layer capacitors in series and a boosting circuit for boosting the voltage of the storage unit. PTL3 discloses a heat pump device and a valve kit.

### Citation List

### Patent Literature

[PTL 1] Japanese Unexamined Patent Application Publication No. 2014-33533
[PTL 2] Japanese Patent No. 5304279B2
[PTL 3] Japanese Patent application No. 2021046981A

### Summary of Invention

### Technical Problem

However, the applied voltage of the super capacitor is low (for example, about 2.5 V) due to the large capacitance. On the other hand, a voltage required to drive a load is often higher than the applied voltage. For example, a required voltage is about 12 V. Then, in order to obtain the required voltage, it is necessary to connect a plurality of (for example, five) super capacitors in series. Due to the characteristics of the capacitors, the combined capacity is halved when connected in series, so that in order to secure the capacity, it is necessary to increase the capacity of each super capacitor. When a plurality of super capacitors having a large capacity are used, there is a concern that the circuit area increases and the costs increases. When the usage is for a power storage element, it is also important to reduce the number of times of charging and discharging to suppress deterioration.

In PTL 1, a configuration is described in which an electric double-layer capacitor is connected via a charging circuit and a discharging circuit while being connected from a battery to a motor that is a load. However, since the voltage required for a load and the output voltage of the battery need to be matched, the higher the voltage required for the load, the more the number of electric double-layer capacitors connected in series may increase.

The present invention has been made in view of such circumstances, and an object thereof is to provide a power supply circuit and an air-conditioning device capable of reducing the number of super capacitors used.

### Solution to Problem

A first aspect of the present invention provides a power supply circuit according to claim 1.

### Advantageous Effects of Invention

According to the present invention, there is an effect that the number of super capacitors used can be reduced.

### Brief Description of Drawings

Fig. 1 is a diagram showing a schematic configuration of a power supply circuit according to an embodiment of the present invention.
Fig. 2 is a diagram showing a refrigerant circuit of an air-conditioning device according to the embodiment of the present invention.

### Description of Embodiments

Hereinafter, an embodiment of a power supply circuit and an air-conditioning device according to the present invention will be described with reference to the drawings. A power supply circuit 1 according to the present embodiment is applied to an air-conditioning device 100.

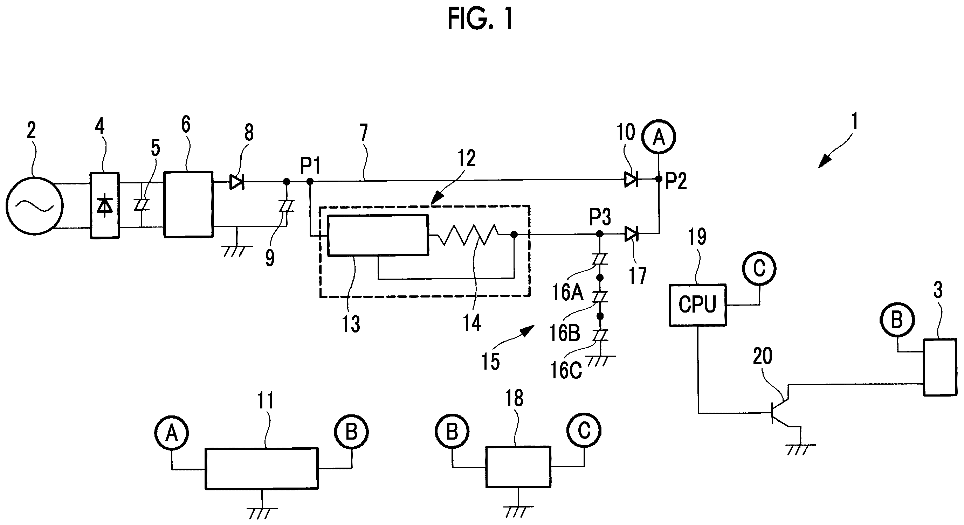

Fig. 1 is a diagram showing a schematic configuration of the power supply circuit 1 according to the embodiment of the present invention. In Fig. 1, lines of a circled A are connected to each other. In Fig. 1, lines of a circled B are connected to each other. In Fig. 1, lines of a circled C are connected to each other. As shown in Fig. 1, in the power supply circuit 1, power is supplied from a power supply 2 to a load 3. The load 3 is a functional product in the air-conditioning device 100.

The power supply 2 generates an AC voltage and is rectified by a rectification part 4. The power supply 2 is, for example, an alternating power supply. The rectified AC voltage (that is, a DC voltage) is supplied to a power supply unit 6 via a smoothing capacitor 5. The power supply unit 6 outputs a constant DC voltage to a DC line 7. In the present embodiment, the voltage of the DC line 7 is assumed to be 7.8 V. A diode 8 that suppresses backflow is provided on the side of the output of the power supply unit 6, so that the inflow of a current to the power supply unit 6 is suppressed. A capacitor 9 is connected in parallel to the side of the output of the diode 8, and the other end of the capacitor is connected to a ground (GND).

The DC line 7 is connected to a booster unit 11 via a diode (first diode) 10. Specifically, the diode 10 is provided between a P1 that is a connection point between one end of a constant current unit 12, which will be described later, and the DC line 7 and a P2 that is a connection point between the other end of the constant current unit 12 and the DC line 7. Then, the backflow of the current from the P2 to the P1 (backflow from the P2 that is a connection point with the other end) is suppressed. That is, in the diode 10, the anode is connected to the P1 and the cathode is connected to the P2.

Then, the constant current unit 12 is connected to the DC line 7. The constant current unit 12 configures a branch route of the DC line 7. Specifically, one end of the constant current unit 12 is connected to the P1 of the DC line 7, and the other end is connected to the P2 of the DC line 7. Then, the constant current unit 12 generates a constant voltage drop by a resistor 14, and outputs a constant current. That is, in the constant current unit 12, a constant voltage is output by a regulator 13, and the voltage is applied to both ends of the resistor 14 to cause a constant current to flow through the resistor 14, so that a constant voltage drop is generated. The constant voltage drop is, for example, 1.25 V. As a result, 7.8 V of the DC line 7 becomes about 6.5 V due to the voltage drop. The regulator is, for example, a three-terminal regulator. The line on the side of the output of the constant current unit 12 is connected to the DC line 7 at the P2.

A capacitance unit 15 is connected in parallel to the side of the output of the constant current unit 12. That is, the side of one end of the capacitance unit 15 is connected to a P3 on the side of the output of the constant current unit 12, and the side of the other end thereof is connected to the ground (GND). Since a constant voltage drop is generated in the constant current unit 12, a voltage of about 6.5 V is applied to the capacitance unit 15.

The capacitance unit 15 includes a plurality of super capacitors 16A, 16B, and 16C, and the respective super capacitors 16A, 16B, and 16C are connected in series. The voltage of the P3 is set to be lower than the voltage of the DC line 7 because the voltage is dropped by the constant current unit 12. Further, since the voltage of the DC line 7 is also boosted and then supplied to the load 3, the voltage can be set low. Therefore, the voltage of the P3 can be effectively set to be lower than the voltage (12 V) supplied to the load 3, so that the number of directly connected super capacitors can be reduced. Specifically, assuming that the P3 is 6.5 V, the number of the super capacitors 16A, 16B, and 16C required in the capacitance unit 15 is three. Since the required number of super capacitors is suppressed, the circuit area can be suppressed. It is also possible to reduce costs.

Since the capacitance unit 15 is charged with the constant current supplied from the constant current unit 12, it is suppressed that a large current flows during charging.

Then, a diode (second diode) 17 is provided between the P3, which is a connection point with the capacitance unit 15, and the P2, which is a connection point with the DC line 7, on the side of the output of the constant current unit 12. The diode 17 suppresses a backflow from the P2 that is a connection point with the DC line 7. That is, in the diode 17, the anode is connected to the P3 and the cathode is connected to the P2.

The booster unit 11 is connected to the DC line 7 and boosts a voltage (that is, the voltage of the P2) to a predetermined voltage. The predetermined voltage is, for example, 12 V. The predetermined voltage is set as a voltage required for the load 3. The booster unit 11 can output a predetermined voltage (12 V) although the input decreases to an allowable lower limit voltage (for example, 3 V) .

Both the voltage from the DC line 7 (that is, the output of the power supply unit 6) and the voltage from the capacitance unit 15 can be input to the booster unit 11. When the power supply 2 is operated normally, 7.8 V is supplied from the power supply unit 6 to the DC line 7, so that power is supplied from the DC line 7 to the booster unit 11 via the diode 10. That is, in the normal state, the discharge of the capacitance unit 15 is not generated. On the other hand, in a state where the power supply 2 is stopped, the output of the power supply 2 is decreased, or the like, 7.8 V cannot be supplied from the power supply unit 6 to the DC line 7. In such a case, when the voltage on the side of the input of the booster unit 11 (that is, the voltage of the P2) decreases and the voltage of the P3 (that is, 6.5 V) increases, the diode 17 enters into a conductive state, and the capacitance unit 15 is discharged, so that power is supplied to the booster unit 11 via the diode 17. When the state continues, the charge of the capacitance unit 15 decreases and the voltage decreases, but the booster unit 11 performs boosting until a predetermined voltage reaches the allowable lower limit voltage.

That is, when the voltage supplied from the power supply unit 6 to the DC line 7 is equal to or less than a predetermined value, the capacitance unit 15 supplies energy to the booster unit 11. The predetermined value is, for example, a voltage of the capacitance unit 15 (a voltage due to the stored charge). As a result, the capacitance unit 15 functions as a backup power supply. That is, deterioration can be suppressed by suppressing frequent charging and discharging of the capacitance unit 15.

Further, since the capacitance unit 15 can discharge until the discharge voltage reaches an allowable lower limit voltage (3 V), energy (energy remaining in the capacitance unit 15) that cannot be supplied to the load 3 can be suppressed.

The booster unit 11 is connected to a regulator 18, and the regulator 18 converts the voltage from the booster unit 11 into a predetermined voltage. For example, the regulator 18 outputs 5 V.

The 12 V generated by the booster unit 11 is supplied to the load 3. That is, a functional product is driven by the voltage boosted by the booster unit 11. On the other hand, the 5 V generated by the regulator 18 is supplied to a CPU 19 for control. That is, the CPU 19 is driven using the 5 V generated by the regulator 18 as a power supply, and a transistor 20 is controlled to control the on/off of the power supply to the load 3.

Next, the air-conditioning device 100 will be described.

Next, a refrigerant circuit in the air-conditioning device 100 will be described with reference to the drawings.

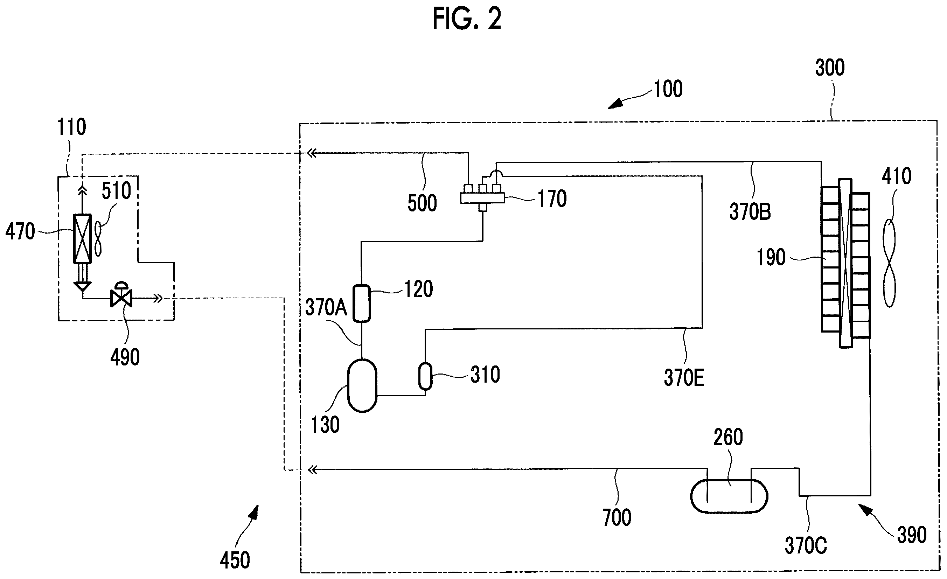

Fig. 2 shows a diagram of a refrigerant circuit of the air-conditioning device 100 according to the present embodiment. The air-conditioning device 100 includes an outdoor unit 300 and an indoor unit 110. The refrigerant circuit shown in Fig. 2 is an example, and is not limited to the configuration shown in Fig. 2 as long as the circuit is a refrigerant circuit.

The outdoor unit 300 includes an inverter-driven compressor 130 that compresses a refrigerant, a muffler (silencer) 120 that suppresses vibration noise generated in the compressor 130, a four-way switching valve 170 that switches the circulation direction of the refrigerant, an outdoor heat exchanger 190 that exchanges heat between the refrigerant and the outside air, a receiver 260 that stores the liquid refrigerant, and an accumulator 310 that separates the liquid from a refrigerant gas sucked into the compressor 130 and causes the compressor 130 to suck only the gas. Each of the devices on the side of the outdoor unit 300 is connected as in related art via a refrigerant pipe such as a discharge pipe 370A, a gas pipe 370B, a liquid pipe 370C, and a suction pipe 370E, and configures an outdoor refrigerant circuit 390. The outdoor unit 300 is provided with an outdoor fan 410 that blows outside air to the outdoor heat exchanger 190. The indoor unit 110 is connected to a gas side pipe 500 and a liquid side pipe 700. As a result, one sealed refrigerating cycle 450 is configured.

The indoor unit 110 includes an indoor heat exchanger 470 that exchanges heat between the refrigerant and the indoor air to provide indoor air conditioning, an indoor fan 510 that circulates the indoor air through the indoor heat exchanger 470, and an expansion valve (EEV) 490.

In the air-conditioning device 100, a cooling operation is performed as follows.

The high-temperature and high-pressure refrigerant gas compressed by the compressor 130 is discharged to the discharge pipe 370A and is supplied to the four-way switching valve 170 via the muffler 120. Thereafter, the refrigerant gas is circulated to the side of the gas pipe 370B by the four-way switching valve 170, and is heat-exchanged with the outside air blown by the outdoor fan 410 by the outdoor heat exchanger 190 to be condensed and liquefied. The liquid refrigerant is temporarily stored in the receiver 260 via the liquid pipe 370C. The liquid refrigerant whose circulation amount is adjusted by the receiver 260 is supplied to the indoor unit 110 via the liquid side pipe 700, and is adiabatically expanded by the expansion valve 490. The liquid refrigerant flows into the indoor heat exchanger 470 in the indoor unit 110. In the indoor heat exchanger 470, the indoor air circulated by the indoor fan 510 is heat-exchanged with the refrigerant, and the indoor air is cooled and used for cooling the room. On the other hand, the refrigerant is gasified, reaches the four-way switching valve 170 via the gas side pipe 500, and is introduced into the accumulator 310 via the suction pipe 370E. In the accumulator 310, the liquid component contained in the refrigerant gas is separated, and only the gas component is sucked into the compressor 130. The refrigerant is compressed again in the compressor 130, and the cooling operation is performed by repeating the above cycle.

On the other hand, a heating operation is performed as follows.

The high-temperature and high-pressure refrigerant gas compressed by the compressor 130 is discharged to the discharge pipe 370A, supplied to the four-way switching valve 170 via the muffler 120, and then circulated to the side of the gas side pipe 500 by the four-way switching valve 170. The refrigerant is derived from the outdoor unit 300 and is introduced into the indoor unit 110. The high-temperature and high-pressure refrigerant gas introduced into the indoor unit 110 is heat-exchanged with the indoor air circulated via the indoor fan 510 in the indoor heat exchanger 470, and the indoor air is heated and used for indoor heating. The liquid refrigerant condensed in the indoor heat exchanger 470 flows into the receiver 260 via the expansion valve 490, and the circulation amount is adjusted by once being stored. The liquid refrigerant flows into the outdoor heat exchanger 190 via the liquid pipe 370C. In the outdoor heat exchanger 190, the outside air blown from the outdoor fan 410 is heat-exchanged with the refrigerant, and the refrigerant absorbs heat from the outside air and is converted into evaporative gas. The refrigerant is introduced from the outdoor heat exchanger 190 to the accumulator 310 via the gas pipe 370B, the four-way switching valve 170, and the suction pipe 370E. In the accumulator 310, the liquid component contained in the refrigerant gas is separated, and only the gas component is sucked into the compressor 130, and is compressed again in the compressor 130. The heating operation is performed by repeating the above cycle.

The power supply circuit 1 is applied to, for example, the air-conditioning device 100 having a refrigerant circuit as shown in Fig. 2. That is, power is supplied to the functional product (load 3) that requires power supply in the air-conditioning device 100. The functional product is, for example, an electronic expansion valve. In Fig. 2, it is an expansion valve 490. When it is necessary to stop the flow of the refrigerant in the refrigerant circuit in a state where the power supply 2 is cut off, the expansion valve of the air-conditioning device 100 is fully closed by the predetermined voltage boosted by the booster unit 11. In Fig. 2, the expansion valve 490 is on the side of the indoor unit, but may be on the side of the outdoor unit.

The power supply destination by the power supply circuit 1 is not limited to the electronic expansion valve.

As described above, according to the power supply circuit and the air-conditioning device according to the present embodiment, a constant DC voltage is output by the power supply unit 6, and the DC voltage is voltage-dropped by a constant value in the constant current unit 12 and is connected to the super capacitors 16A, 16B, and 16C connected in parallel. Although the super capacitors 16A, 16B, and 16C have a large capacitance but a low applied voltage, a voltage drop occurs, so that the number of series can be suppressed. Therefore, the number of the required super capacitors 16A, 16B, and 16C can be suppressed, and the circuit area can be suppressed. The costs required for the super capacitors 16A, 16B, and 16C can also be suppressed.

Since the booster unit 11 is connected to the DC line 7, and the constant current unit 12 and the capacitance unit 15 are connected to the DC line 7, the capacitance unit 15 can serve as a backup. That is, the boosting can be stably performed by the voltage from the power supply unit 6 and the voltage from the capacitance unit 15.

When the voltage supplied from the power supply unit 6 to the DC line 7 is equal to or less than a predetermined value, the capacitance unit 15 supplies energy to the booster unit 11 to suppress steady discharge of the capacitance unit 15, and deterioration can be suppressed.

The diode 10 and the diode 17 suppress the backflow from the booster unit 11 to the power supply unit 6 via the DC line 7 and the backflow from the booster unit 11 to the capacitance unit 15 and the constant current unit 12, to improve the stability of the circuit.

The present invention is not limited to only the embodiments described above, and various modifications can be made within a scope which does not depart from the scope of the invention as defined in the appended claims.

The power supply circuit and the air-conditioning device described in each embodiment described above are, for example, grasped as follows.

The power supply circuit 1 according to the present invention is a power supply circuit applied to the air-conditioning device 100, and includes the power supply unit 6 that outputs a constant DC voltage to the DC line 7, the constant current unit 12 that has one end connected to the DC line, generates a constant voltage drop by the resistor 14, outputs a constant current, and has the other end connected to the DC line, the capacitance unit 15 that is connected in parallel to a side of an output of the constant current unit and has the plurality of super capacitors 16A, 16B, and 16C connected in series, and the booster unit 11 that boosts a voltage of the DC line to a predetermined voltage.

As described above, according to the power supply circuit according to the present invention, a constant DC voltage is output by the power supply unit, and the DC voltage is voltage-dropped by a constant value in the constant current unit and is connected to the super capacitors connected in parallel. Although the super capacitors have a large capacitance but a low applied voltage, a voltage drop occurs, so that the number of series can be suppressed. Therefore, the number of the required super capacitors can be suppressed, and the circuit area can be suppressed. The costs required for the super capacitors can also be suppressed.

Since the booster unit is connected to the DC line, and the constant current unit and the capacitance unit are connected to the DC line, the capacitance unit can serve as a backup. That is, the boosting can be stably performed by the voltage from the power supply unit and the voltage from the capacitance unit.

In the power supply circuit according to the present disclosure, the capacitance unit may supply energy to the booster unit when a voltage supplied from the power supply unit to the DC line is equal to or less than a predetermined value.

According to the power supply circuit according to the present invention, when the voltage supplied from the power supply unit to the DC line is equal to or less than a predetermined value, the capacitance unit supplies energy to the booster unit to suppress steady discharge of the capacitance unit and deterioration can be suppressed.

The power supply circuit according to the present invention may include a first diode that is provided between a connection point at the one end and a connection point at the other end of the constant current unit in the DC line and suppresses backflow from the other end, and a second diode that is provided between a connection point with the capacitance unit and a connection point with the DC line on the side of the output of the constant current unit and suppresses backflow from the connection point with the DC line.

According to the power supply circuit according to the present invention, between a connection point at the one end and a connection point at the other end of the constant current unit in the DC line, the first diode that suppresses backflow from the other end is provided, and between a connection point with the capacitance unit and a connection point with the DC line on the side of the output of the constant current unit, a second diode that suppresses backflow from the connection point with the DC line is provided. As a result, the backflow from the booster unit to the power supply unit via the DC line and the backflow from the booster unit to the capacitance unit and the constant current unit are suppressed to improve the stability of the circuit.

In the power supply circuit according to the present disclosure, the expansion valve 490 of the air-conditioning device may be fully closed by the predetermined voltage boosted by the booster unit.

According to the power supply circuit according to the present invention, since the super capacitor is used as a backup, it is possible to perform stable boosting and to improve the reliability of the fully closed control of the expansion valve of the air-conditioning device.

The air-conditioning device according to the present invention includes a refrigerant circuit and the power supply circuit described above.

### Reference Signs List

1: Power supply circuit
2: Power supply
3: Load
4: Rectification part
5: Capacitor
6: Power supply unit
7: DC line
8: Diode
9: Capacitor
10: Diode
11: Booster unit
12: Constant current unit
13: Regulator
14: Resistor
15: Capacitance unit
16A: Super capacitor
16B: Super capacitor
16C: Super capacitor
17: Diode
18: Regulator
19: CPU
20: Transistor
100: Air-conditioning device
110: Indoor unit
120: Muffler
130: Compressor
170: Four-way switching valve
190: Outdoor heat exchanger
260: Receiver
300: Outdoor unit
310: Accumulator
370A: Discharge pipe
370B: Gas pipe
370C: Liquid pipe
370E: Suction pipe
390: Outdoor refrigerant circuit
410: Outdoor fan
450: Refrigerating cycle
470: Indoor heat exchanger
490: Expansion valve
500: Gas side pipe
510: Indoor fan
700: Liquid side pipe

## Claims

1. A power supply circuit (1) applied to an air-conditioning device (100), comprising:
a power supply unit (6) that outputs a constant DC voltage to a DC line (7);
a constant current unit (12) that has one end connected to the DC line, generates a constant voltage drop by a resistor (14), outputs a constant current, and has the other end connected to the DC line; a capacitance unit (15)comprising a plurality of super capacitors connected in series; and a booster unit (11);
**characterized in that** the capacitance unit (15) is connected in parallel to a side of an output of the constant current unit; and
**in that** the booster unit (11) boosts a voltage of the DC line to a predetermined voltage,
wherein a voltage from the DC line (7) and a voltage from the capacitance unit (15) are supplied to the booster unit (11) .

2. The power supply circuit according to claim 1, wherein
the capacitance unit (15) supplies energy to the booster unit (11) when a voltage supplied from the power supply unit (6) to the DC line (7) is equal to or less than a predetermined value.

3. The power supply circuit according to claim 1 or 2, further comprising:
a first diode (10) that is provided between a connection point at the one end and a connection point at the other end of the constant current unit (12) in the DC line (7) and suppresses backflow from the other end; and
a second diode that is provided between a connection point with the capacitance unit (15) and a connection point with the DC line (7) on the side of the output of the constant current unit (12) and suppresses backflow from the connection point with the DC line.

4. The power supply circuit according to any one of claims 1 to 3, wherein
an expansion valve (490) of the air-conditioning device (100) is fully closed by the predetermined voltage boosted by the booster unit (11).

5. An air-conditioning device (100) comprising:
a refrigerant circuit; and
the power supply circuit (1) according to any one of claims 1 to 4.

## Patentansprüche

1. Stromversorgungsschaltung (1), angewandt auf eine Klimatisierungsvorrichtung (100), umfassend:
eine Stromversorgungseinheit (6), die eine konstante DC-Spannung an eine DC-Leitung (7) ausgibt;
eine Konstantstromeinheit (12), deren eine Ende mit der DC-Leitung verbunden ist, die einen konstanten Spannungsabfall durch einen Widerstand (14) erzeugt, die einen Konstantstrom ausgibt und deren andere Ende mit der DC-Leitung verbunden ist;
eine Kapazitätseinheit (15), umfassend eine Vielzahl von in Reihe verbundenen Superkondensatoren; und
eine Booster-Einheit (11);
**dadurch gekennzeichnet, dass** die Kapazitätseinheit (15) parallel zu einer Seite eines Ausgangs der Konstantstromeinheit verbunden ist; und
dass die Booster-Einheit (11) eine Spannung der DC-Leitung auf eine vorbestimmte Spannung verstärkt,
wobei eine Spannung von der DC-Leitung (7) und eine Spannung von der Kapazitätseinheit (15) der Booster-Einheit (11) zugeführt werden.

2. Stromversorgungsschaltung nach Anspruch 1, wobei
die Kapazitätseinheit (15) Energie an die Booster-Einheit (11) zuführt, wenn eine von der Stromversorgungseinheit (6) an die DC-Leitung (7) zugeführte Spannung gleich wie oder kleiner als ein vorbestimmter Wert ist.

3. Stromversorgungsschaltung nach Anspruch 1 oder 2, ferner umfassend:
eine erste Diode (10), die zwischen einem Verbindungspunkt an dem einen Ende und einem Verbindungspunkt an dem anderen Ende der Konstantstromeinheit (12) in der DC-Leitung (7) bereitgestellt ist und einen Rückfluss von dem anderen Ende unterdrückt; und
eine zweite Diode, die zwischen einem Verbindungspunkt mit der Kapazitätseinheit (15) und einem Verbindungspunkt mit der DC-Leitung (7) auf der Seite des Ausgangs der Konstantstromeinheit (12) bereitgestellt ist und einen Rückfluss von dem Verbindungspunkt mit der DC-Leitung unterdrückt.

4. Stromversorgungsschaltung nach einem der Ansprüche 1 bis 3, wobei
ein Expansionsventil (490) der Klimatisierungsvorrichtung (100) durch die vorbestimmte, von der Booster-Einheit (11) verstärkte Spannung vollständig geschlossen wird.

5. Klimatisierungsvorrichtung (100), umfassend:
einen Kältemittelkreislauf; und
die Stromversorgungsschaltung (1) nach einem der Ansprüche 1 bis 4.

## Revendications

1. Circuit d'alimentation électrique (1) appliqué à un dispositif de climatisation (100), comprenant :
une unité d'alimentation électrique (6) qui délivre une tension continue constante à une ligne de courant continu (7) ;
une unité de courant constant (12) qui a une extrémité reliée à la ligne de courant continu, génère une chute de tension constante par une résistance (14), délivre un courant constant, et a l'autre extrémité reliée à la ligne de courant continu ;
une unité de capacitance (15) comprenant une pluralité de supercondensateurs reliés en série ; et
une unité de suralimentation (11) ;
**caractérisé en ce que** l'unité de capacitance (15) est reliée en parallèle à un côté d'une sortie de l'unité de courant constant ; et
**en ce que** l'unité de suralimentation (11) suralimente une tension de la ligne de courant continu en une tension prédéterminée,
une tension qui provient de la ligne de courant continu (7) et une tension qui provient de l'unité de capacitance (15) étant fournies à l'unité de suralimentation (11).

2. Circuit d'alimentation électrique selon la revendication 1,
dans lequel
l'unité de capacitance (15) fournit de l'énergie à l'unité de suralimentation (11) lorsqu'une tension fournie par l'unité d'alimentation électrique (6) à la ligne de courant continu (7) est égale ou inférieure à une valeur prédéterminée.

3. Circuit d'alimentation électrique selon la revendication 1 ou 2, comprenant en outre :
une première diode (10) qui est prévue entre un point de connexion à une extrémité et un point de connexion à l'autre extrémité de l'unité de courant constant (12) sur la ligne de courant continu (7) et supprime le retour depuis l'autre extrémité ; et
une deuxième diode qui est prévue entre un point de connexion avec l'unité de capacitance (15) et un point de connexion avec la ligne de courant continu (7) sur le côté de la sortie de l'unité de courant constant (12) et supprime le retour depuis le point de connexion avec la ligne de courant continu.

4. Circuit d'alimentation électrique selon l'une quelconque des revendications 1 à 3, dans lequel
Un détendeur (490) du dispositif de climatisation (100) est entièrement fermé par la tension prédéterminée suralimentée par l'unité de suralimentation (11).

5. Dispositif de climatisation (100) comprenant :
un circuit de réfrigérant ; et
le circuit d'alimentation électrique (1) selon l'une quelconque des revendications 1 à 4.
